# EUROPEAN PATENT SPECIFICATION

(11) **EP 4 485 153 B1**
(45) Date of publication and mention of the grant of the patent: **14.01.2026**
(21) Application number: 23216921.9
(22) Date of filing: 14.12.2023
(51) Int. Cl.: G06F 3/0354, G06F 3/038, G06F 3/041, G06N 3/02, G06N 3/08, G06N 3/09, G06F 3/04883, G06N 3/045

(54) **STYLUS TRAJECTORY PREDICTION**
STIFTBAHNVORHERSAGE
PRÉDICTION DE TRAJECTOIRE DE STYLET

(30) Priority: 29.06.2023 US 202318216217
(43) Date of publication of application: 01.01.2025
(73) Proprietor: INTEL Corporation, Santa Clara, CA 95054 (US)
(72) Inventor: MYLARAPPA GOWDA, Niranjan, Santa Clara, 95054 (US); CHENG, Antonio S., Santa Clara, 95054 (US); BELOGOLOVY, Andrey, Santa Clara, 95054 (US); STUPACHENKO, Evgeny, Santa Clara, 95054 (US)
(74) Representative: Rummler, Felix

(56) References cited:
- HENZE, FUNK, SAHAMI SHIRAZI: "Software-reduced touchscreen latency", 6 September 2016 (2016-09-06), New York, NY, USA, pages 434 - 441, XP093153503, ISBN: 978-1-4503-4408-1, Retrieved from the Internet <URL:https://dl.acm.org/doi/pdf/10.1145/2935334.2935381> [retrieved on 20240418], DOI: 10.1145/2935334.2935381

## Description

### TECHNICAL FIELD

Embodiments described herein generally relate to computer input services and more specifically to stylus trajectory prediction.

### BACKGROUND

Computer input devices are hardware peripherals that allow users to provide instructions and interact with a computer system. They enable users to input data, commands, and other types of information into the computer for processing. Examples of computer input devices include a keyboard, a mouse, a trackpad, a microphone, a camera, and a joystick.

Touch-Display type computer input devices, such as a touchscreen or a digitizer tablet, can use touch input to, for example, digitally capture writing or drawing inputs. These devices can use a number of techniques to sense the position of a stylus (e.g., writing instrument) on a display. In general, a stylus is detected on a device surface through one of two primary technologies: capacitive or resistive touch sensing. Capacitive touch sensing uses a capacitive screen in which the display is coated with a transparent conductor. When an object, such as a finger or a stylus designed for capacitive screens, comes close to the screen, it changes the electrostatic field of the conductor and leads to a change in capacitance enabling the object to be located on the screen. Resistive touch sensing includes two layers of the screen that have a gap between them. When an object interacts with the screen, the layers are pushed together changing the electrical resistance of the layers, enabling the object causing the gap to narrow to be detected. Other examples can combine motion and pressure information in a stylus with those of the touch screen to provide the location of a stylus.

Niels Henze, Markus Funk, Alireza Sahami Shirazi: "Software-reduced touchscreen latency", Proceedings of the 18th International Conference on Human-Computer Interaction with Mobile Devices and Services; September 6 - 9, 2016; Florence Italy, 6 September 2016 (2016-09-06), pages 434-441, describe a software-based method to reduce touchscreen latency by predicting finger movements via neural networks.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 is a diagram of an example of an environment including a system for stylus trajectory prediction, according to an embodiment.
FIG. 2 illustrates a prediction with angular error and a prediction with linear error, according to an embodiment.
FIG. 3 illustrates several examples of predicted trajectories, according to an embodiment.
FIG. 4 illustrates an example of component connectivity, according to an embodiment.
FIG. 5 illustrates a flow diagram of an example of a method for stylus trajectory prediction, according to an embodiment.
FIG. 6 is a block diagram illustrating an example of a machine upon which one or more embodiments may be implemented.

### DETAILED DESCRIPTION

When using a touch-display type input device, the user is typically using a stylus, or finger, on a surface and a representation, such as a line, is displayed under the stylus on a screen. There is some latency between the detection of a stylus point on the surface and the rendering of a point on the screen. When the latency is great, the user generally has a poor experience with the device. This latency may be called a touch-to-photon latency. Touch-to-photon latency can vary depending upon hardware and software design. While the latency may be minimized when a device, stylus, and software are tuned for each other, often this is not possible where there are different manufacturers for each element.

To address touch-to-photon latency, a type of trajectory or next point prediction is often employed. These techniques seek to predict the position of the stylus at a future time step in order to initiate rendering on the screen before the stylus has reached the next point. Current next point prediction falls into two groups: using a physics model or algebraic model-which considers momentum, acceleration, etc. of the stylus-or using a machine learning model-which generally minimizes error between a predicted output and an observed output during training. The first group includes classical techniques such as Kalman Filters, Motion Kinematics based prediction, Kinematic Template matching, Taylor-series based prediction, and curve fitting, among others. The second group generally uses multilayer perceptrons (MLPs), recurrent neural networks (RNNs), or other artificial intelligence (AI) arrangements that are trained to minimize output errors.

Current next point prediction techniques have a number of drawbacks. These techniques tend to have low accuracy (e.g., large prediction errors), treat all predictions equally (e.g., minimize all errors), or are complex (e.g., using millions of multiplications for each trajectory prediction). Physics models tend to have lower complexity than neural network (NN) based techniques, but also generally have lower accuracy than the NN based techniques, for example, when prediction lengths are longer than 20-40 milliseconds. As the prediction length increases, the accuracy gap between physics models and NN techniques tends to increase. The accuracy problem is due to inertial or physical laws of motion on the motion trajectory remaining dominant only at short time durations. The conscious human actions begin to dominate the changes in the trajectory at longer durations (e.g., 40-50 milliseconds). These actions generally cannot be modeled as a function of the recent stylus point history using physics or algebraic models. But data aided universal function approximators like deep neural networks (DNNs) can help model the actions. Hence, there is an upsurge in using AI methods for stylus prediction.

Although NN based techniques have better accuracy than the physics models, current NN techniques generally have greater complexity, treat all types of prediction errors equally, or both. For example, there are no current techniques that minimize jitter or other angular deviation errors. Rather, these techniques minimize all errors. While this may seem beneficial, users experience angular errors more acutely than lead, or distance, errors along a path. Thus, current NN techniques tend to have greater angular errors in order to minimize total error in the next point prediction.

What is needed is a device-agnostic next point prediction technique that can provide low latencies and minimize errors that impact the user experience the most. When the stylus, touch device, and the software are all from the same manufacturer, less than 10 millisecond touch-to-photon latency can be achieved. However, the raw latency can be as high as 100-200 milliseconds when the hardware and software are sourced from different manufacturers. This is the case for many computer systems today. Hence, a platform- and stylus-agnostic prediction technique will improve touch-to-photon latency for these systems.

To address these issues, a neural network technique that minimizes angular error over other errors is described herein. That is, errors other than angular errors (radial errors), are minimized at a lower priority than the angular error. In addition, in angular error minimization, large angular errors are prioritized over low angular errors. Other aspects that may be employed to reduce the complexity of operating the NN model for less powerful devices-such as mobile phones, tablets, etc.-include a normalization of inputs to the NN as well as the possibility of splitting the NN into angular prediction and other prediction components (e.g., distance) during training or implementation. This last point simplifies the aggressive minimization of a subset of prediction errors that are more acutely perceived by users.

Input normalization may include a transformation of the stylus movements into polar coordinates, assignment of different weights to different bins of angular and radial errors, and minimization of the weighted sum of the errors. Complexity may be addressed by reducing the next point prediction search space by: independent prediction in the two dimensions of the prediction range instead of a joint prediction; normalizing the detected inputs in time-thus removing the need to explicitly estimate the motion kinematic parameters or include them as additional parameters for the NN to model-and reduction of the range of input or output variations of the NN by transforming the recent stylus trajectory input and predicted output to be agnostic to rotation, length, or origin. By using these techniques, acceptable touch-to-photon latencies may be achieved on a variety of devices across manufacturers while maintaining accuracy of the next point prediction and reducing complexities by removing the need to explicitly address input velocity or other motion parameters, or timestamps of inputs to the NN by interpolating and uniformizing those stylus coordinates. Additional details and examples are provided below.

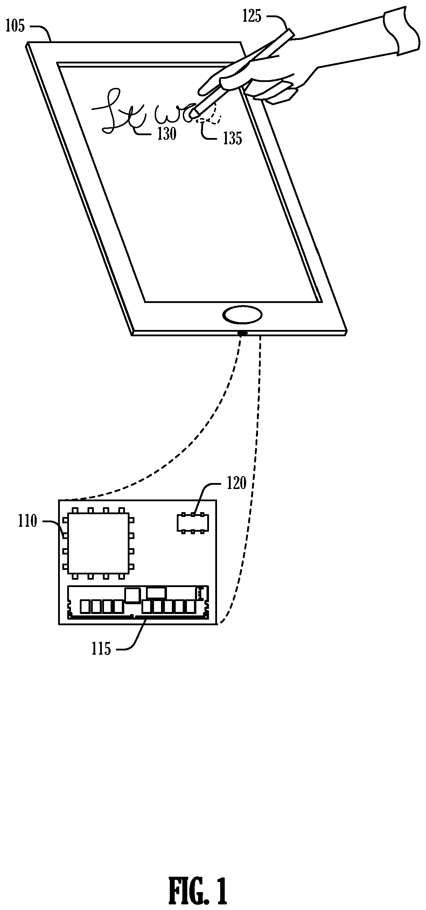

FIG. 1 is a diagram of an example of an environment including a system 105 for stylus trajectory prediction, according to an embodiment. The illustrated system 105 includes a surface arranged on top of a display such that points detected on the surface from the stylus 125 are rendered on the display, such as the output 130. The system 105 includes processing circuitry 110, a memory 115, and an interface 120. The interface 120 may be configured to obtain (e.g., receive, retrieve, or detect) the points from the surface caused by the stylus 125, or another pointing object such as a finger, pointer, etc. In an example, the interface 120 is also configured to provide predicted point outputs for rendering on the display, though other techniques may be employed, such as writing to the memory 115 or another interface.

The processing circuitry 110 may be a processor-such as a central processing unit (CPU), graphics processing unit (GPU), field programmable gate array (FPGA), other hardware component or collection thereof-that is hardwired or configured by instructions (e.g., software) to perform a variety of operations for stylus trajectory prediction. When instructions provide runtime configuration for the processing circuitry 110, the instructions may be stored in whole or part in the memory 115, or in other storage of the system 105.

As illustrated, the user has produced a set of point that were rendered as the output 130. The processing circuitry 110 has also predicted a set of next points 135 for rendering. To achieve these next points, the processing circuitry 110 is configured to obtain a set of points that are derived from the stylus 125 moving on the surface. In an example, the surface is a capacitive touch screen. In an example, the surface is a resistive touch screen. In an example, the set of points are decoded directly from the surface (e.g., via the interface 120). In an example, the points are obtained from another element of a system, such as a processor, graphics subsystem, network, etc. Again, the interface 120 may be used in this retrieval, although a direct memory access technique may be used to write the points directly to the memory 115 from which they are read by the processing circuitry 110.

The processing circuitry 110 is configured to invoke an artificial neural network (ANN) on an input set. Here, the input set is based on the set of points that were previously obtained from the surface. The ANN is configured (e.g., designed and trained) to output a next point from the input set. The next point is a prediction of a location of the stylus 125 at a next moment (e.g., step) in time. The ANN is trained to minimize angular error for the output point over other errors. Different ANN designs may be employed, such as a convolutional NN, a recurrent NN, or a transformer. Generally, because the next point prediction is based on a sequence of previous inputs, RNNs or transformers are high performing NN architectures. Simple DNNs like feedforward NNs or multilayer-perceptrons have the advantage of lower training and runtime complexity than transformers or RNNs, but generally at the cost of reduced performance. However, for the stylus next-point prediction, some simple DNNs perform reasonably well enough to be used in practice.

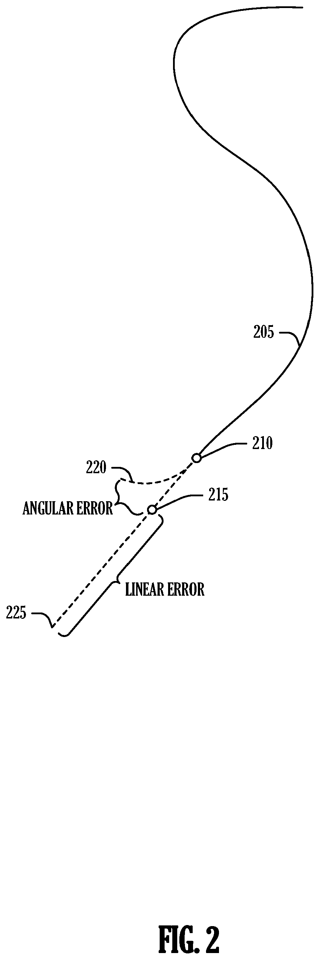

The ANN is trained to minimize angular errors above all other errors. For simplicity, errors are reduced to two types, angular and linear in this discussion. Given a line, the angular error is the deviation from the line while the linear error is a mis-prediction of the next point on the line, either too far along the line or not far enough. Generally, the user perceives angular errors more acutely than linear errors. However, linear errors that are too far along the line may become angular errors as the stylus curves, for example. Angular errors may encompass such things a jitter that deviate from the line intended by the user. FIG. 2 illustrates an example of an angular error and a linear error.

In an example, the processing circuitry 110 is configured to create the input set from the set of points. Here, the creation of the input set is preprocessing of the set of points to increase accuracy or reduce complexity of the ANN. In an example, creating the input set from the set of points includes interpolating the set of points in time to produce a uniform time interval between points. For example, if the set of points has five entries between a first time and a second time, the period between the first time and the second time is divided into five equal sub-periods and a point is assigned to each. Thus, the timestamps of the individual points are not tracked. Because the points will now appear to have arrived at equal time intervals, the ANN need not be trained, or operate upon, time variable inputs, reducing complexity of the ANN and training of the ANN. Accordingly, in an example, the input set is a vector of coordinates with each element of the vector representing an interpolated position at the uniform time interval.

In an example, the processing circuitry 110 is configured to create the input set by normalizing the vector with respect to origin, length, or angle. Similar to the time interpolation, this normalization reduces complexity in the input set to simplify ANN operations. In an example, normalizing the vector with respect to origin includes shifting an origin of the vector to the latest detected coordinate of the stylus 125. This aligns the prediction to the stylus 125 such that each prediction could be considered to operate from a single point from the perspective of the ANN.

In an example, normalizing the vector with respect to length includes modifying a length of the vector to a predefined length. Thus, the ANN operates on a fixed number of points. The normalization may include removing elements of the set of points if there are more than the predefined length or adding elements at the interpolated positions if there are too few points in the set of points.

In an example, normalizing the vector with respect to angle includes rotating the vector to a predefined angle. This translation enables the ANN to operate as if it is always at a same point and orientation with respect to the prediction. In an example, the reverse of the angle transformation can be applied to the predicted next point if needed.

In an example, creating the input set from the set of points includes converting the set of points into polar coordinates where each coordinate is defined by a pair that includes a radius and an angle. In an example, the ANN is trained on the input set to reduce error in the angle. In an example, the ANN is configured to predict error for the radius and the angle independently. The independent prediction of the angle and the radius reduces the search space for the ANN, thus reducing complexity. The search space may be further reduced by limiting the prediction to discreet steps, such as ten-degree variations in angle or five-millimeter variations in radius. As noted above, between the two dimensions of prediction, the angular error is minimized even if the total error (e.g., the error in both the angle and radius) is greater, because this leads to a better user experience.

The processing circuitry 110 is configured to communicate the next point for rendering on the display. In a direct memory access arrangement, the communication may include writing the next point to the memory 115, from which the next point will be read by a GPU or other display rendering circuitry. In an example, the interface 120 is the recipient of the communication for rendering to the display. In an example, a GPU, or other circuitry, is the recipient of the communication. Once communicated, the display renders the next point to the screen.

FIG. 2 illustrates a prediction with angular error and a prediction with linear error, according to an embodiment. Here, the line 205 has already been indicated by a stylus. The point 210 indicates the terminus of the set of points already received from the stylus. The point 215 indicates the next point that will be received by the stylus. The line 220 indicates a predicted trajectory that includes an angular error while the line 225 indicates a predicted trajectory with a linear error. Here, the linear error is too long. As noted above, it is more important to the user experience to minimize the angular error. However, if the stylus turns to the upper left, it is apparent that the once linear error of the line 225 will also become an angular error. Accordingly, in an example, given an option between making the predicted trajectory of the line 225 too long, or too short, too short is preferred.

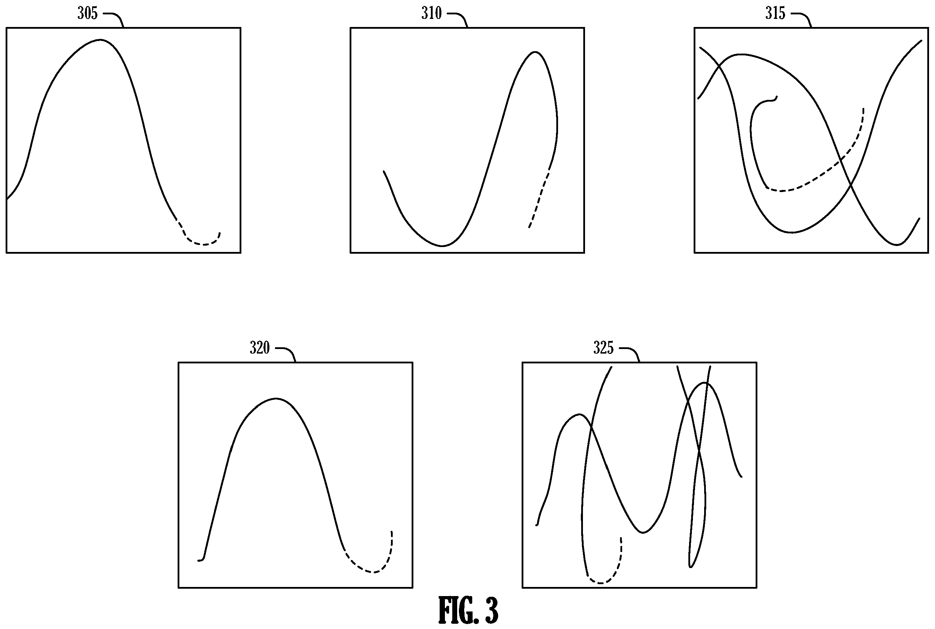

FIG. 3 illustrates several examples of predicted trajectories, according to an embodiment. The illustrated examples approximate experimental results using the techniques described with respect to FIG. 1. The training dataset used more than fifty thousand touch events mostly falling into three types of motion: sinusoidal like, linear, or spiral. Example 305 and Example 320 illustrate sinusoidal like predictions. Example 310 illustrates a linear prediction. Example 315 and Example 325 illustrate a spiral prediction.

Two ANNs were used in the prediction one for angular prediction and one for radial (e.g., distance) prediction. The two ANNs were multilayer perceptrons with one hidden layer, 100 nodes in the hidden layer, and Rectified Linear Unit (ReLU) activation functions. The ANNs were fed 128 milliseconds of recent history (e.g., the set of points) and are trained to predict up to 128 milliseconds of future trajectory at a resolution of sixteen milliseconds.

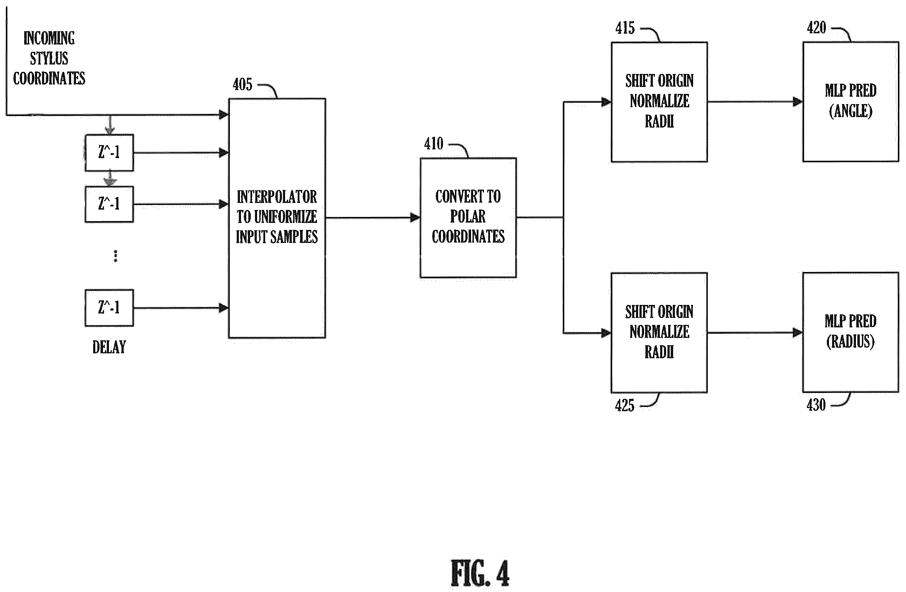

FIG. 4 illustrates an example of component connectivity, according to an embodiment. As illustrated, the input is a vector of x and y coordinates from the past 128 milliseconds of trajectory sampled at sixteen, eight, and four millisecond intervals. The output is 128 milliseconds future trajectory at the same or higher granularity as the input vector. An input uniformizer 405, a polar coordinate converter 410, and normalizer 415 and normalizer 425 are used to feed the ANGLE ANN 420 and the RADIUS ANN 430 to produce the future trajectory.

The input uniformizer 405 is configured to produce a linear time interpolation for the arriving input coordinates. The inputs may arrive asynchronously because the surface or internal measuring unit (IMU) may not sample the stylus touch location at a regular period. The input uniformizer 405 is configured to generate a vector of coordinates spaced at a predefined interval of T milliseconds, such as every eight milliseconds, every sixteen milliseconds, etc. This reduces the complexity of both run time and training because, with uniformly spaced inputs, the velocity, acceleration, snap, jerk or other higher order derivatives of position may be omitted from inputs to the ANN. Thus, the ANN does not have to be trained to deal with these elements to produce the predicted trajectory. With uniform samples, the ANN will have fewer parameters, such as derivatives of position with respect to time, as part of the model. Although position is used here to represent the stylus input (e.g., as a set of points), other aspects of the stylus input may also be used, such as pressure, which may have a higher correlation to angular changes including abrupt directional changes.

Timing may be done in several domains. Generally, there is a desire to synchronize the surface sampling rate with the display refresh rate. In general, the input sampling rate is higher. Operations to make the input timing uniform may operate in three time domains: the input rate, the display rate, or another rate not based on the input or the display rate. The input rate domain will generally need to be converted to the display rate for rendering. The display rate domain is usually a longer period than the input rate and may introduce greater errors but entails fewer conversions to render on the display. The third option doubles rate conversions (e.g., from the input rate to the other rate and then to the display rate) but may reduce difficulties in cross-device model comparisons.

The polar coordinate converter 410 converts cartesian coordinates from the set of points to polar coordinates. This can be used to split the prediction of angle and radius into independent prediction branches as illustrated. This simplifies the identification of different types of prediction errors and enables assignment of different weights to the respectively ANGLE ANN 420 and RADIUS ANN 430 during training. The prediction of radius and angle (e.g., theta) independently further reduces ANN complexity. Complexity reductions are achieved because the size of the search space for the pair (r,θ) will be the product of sizes of their respective search spaces. As the search space increases, the size of the ANN required, the training data set size and the training duration will also increase proportionally. Hence, predicting r and θ independently saves complexity in terms of the size of the ANNs, training data-set size, and the training duration.

The normalizers, normalizer 415 and normalizer 425, transform the inputs to be position, rotation, and length invariant. For example, the origin of the input vector is shifted to a latest known coordinate. Further, lengths of the inputs are normalized, and the inputs are rotated (e.g., de-rotated) to cause them to be invariant in all three mentioned aspects. The normalizers do not discard information of the arriving coordinates because the absolute value of the latest coordinate, reference angle, or length may be stored in order to apply the inverse transforms to the outputs of ANNs. However, the normalizers further reduce the search space dimensions by reducing the range of the variations in the input values that go into the ANNs.

As mentioned earlier, some errors in prediction are perceived by users to be worse than other errors. Current NN based prediction models tend to minimize the mean squared error (MSE) between the predicted outputs and the actual trajectory. Such minimization of the average of all errors is less than ideal because users perceive some type of errors to be tolerable and some other type of errors jarring enough to ruin the usage experience. For example, users perceive a prediction error that is five pixels behind, but in the same direction of the next point to be more tolerable than an error that is five pixels away in a direction orthogonal to the current direction of writing. To address this problem, errors may be classified into groups based on the magnitude of error in θ (e.g., angle or direction) and radius. The groups are assigned different weights. The weights progressively increase as the errors in θ increase and the weights for the errors in radii are lesser than that of θ. The ANNs are trained to minimize the weighted sum of the errors instead of MSE. Such training may increase the MSE of the prediction, but the user experience is better than MSE-minimizing NNs.

In an example, prediction errors may be perceived as more jarring during abrupt changes in direction rather than seeing just the unpredicted trajectory (e.g., no next point is outputted for rendering) or short predicted trajectories (e.g., if the direction along which the trajectory changes can be predicted with a high probability). Accordingly, abrupt angular changes are weighted more heavily than less abrupt (e.g., continuous, smoother, etc.) angle changes when minimizing angular error. In an example, given a sharp change in direction, shortening or switching off the predicted output trajectory may be used to improve the user experience. This technique may be employed when prediction confidence (e.g., the direction of the stylus travel cannot be reliably predicted) is low. Because stylus motion tends to move to a velocity of zero during these abrupt changes, users are less likely to perceive the shorter or no prediction in such cases. Further, when prediction errors are large, the ANN weights may be retrained slowly for several tens of minutes or hours with small batches of data and the retrained weights may be retained when the error performance improves.

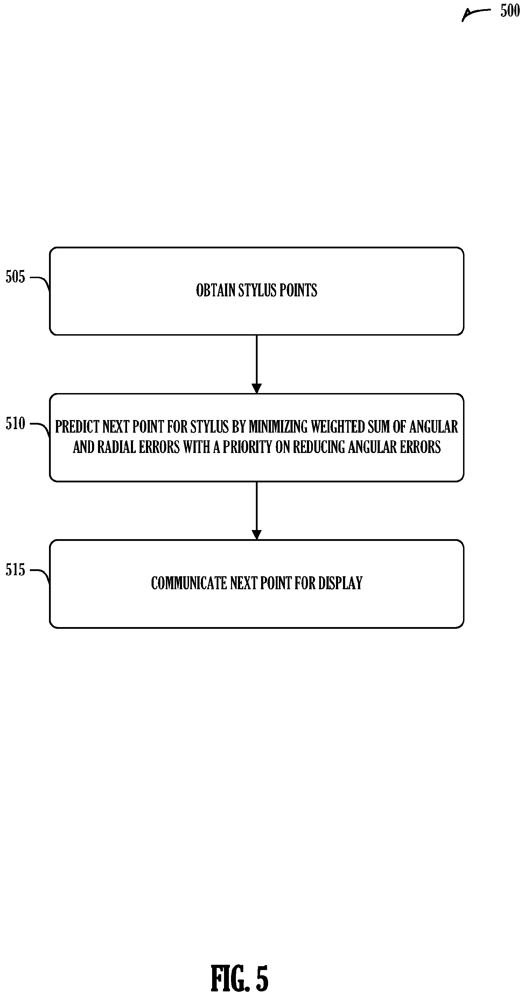

FIG. 5 illustrates a flow diagram of an example of a method 500 for stylus trajectory prediction, according to an embodiment. Operations of the method 500 are performed by computational hardware, such as that described above or below (e.g., processing circuitry).

At operation 505, a set of points is obtained. Here, the set of points are derived from a stylus moving on a surface. In an example, the surface is a capacitive touch screen. In an example, the surface is a resistive touch screen. In an example, the set of points are decoded directly from the surface. In an example, the points are obtained (e.g., retrieved or received) from another element of a system, such as a processor, graphics subsystem, network, etc.

At operation 510, an artificial neural network (ANN) is invoked on an input set. Here, the input set is based on the set of points that were previously obtained. The ANN is configured (e.g., designed and trained) to output a next point from the input set. Here, the next point is a prediction of a location of the stylus at a next moment (e.g., step) in time. The ANN is trained to minimize angular error for the output point over other errors.

In an example, the method 500 includes the additional operation of creating the input set from the set of points. In an example, creating the input set from the set of points includes interpolating the set of points in time to produce a uniform time interval between points. In an example, the input set is a vector of coordinates with each element of the vector representing an interpolated position at the uniform time interval.

In an example, creating the input set includes normalizing the vector with respect to origin, length, or angle. In an example, normalizing the vector with respect to origin includes shifting an origin of the vector to a latest detected coordinate of the stylus. In an example, normalizing the vector with respect to length includes modifying a length of the vector to a predefined length. In an example, normalizing the vector with respect to angle includes rotating the vector to a predefined angle.

In an example, creating the input set from the set of points includes converting the set of points into polar coordinates. Here, each coordinate is defined by a pair that includes a radius and an angle. In an example, the ANN is trained on the input set to reduce error in the angle. In an example, the ANN is configured to predict error for the radius and the angle independently.

At operation 515, the next point is communicated for rendering on a display. In an example, a device includes the surface and the display. Here, the display and the surface are arranged such that the next point appears to be rendered under the stylus.

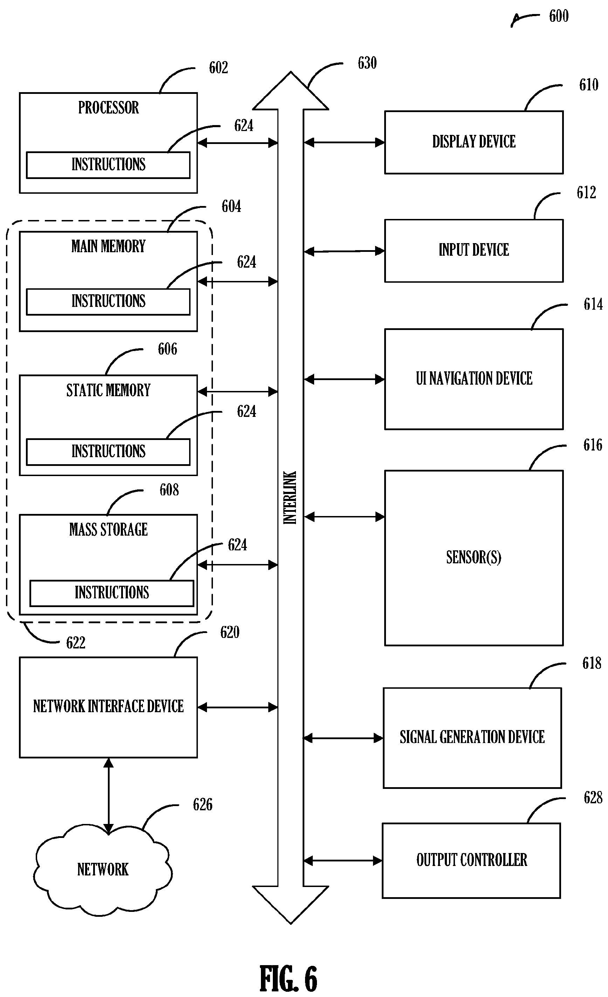

FIG. 6 illustrates a block diagram of an example machine 600 upon which any one or more of the techniques (e.g., methodologies) discussed herein may perform. Examples, as described herein, may include, or may operate by, logic or a number of components, or mechanisms in the machine 600. Circuitry (e.g., processing circuitry) is a collection of circuits implemented in tangible entities of the machine 600 that include hardware (e.g., simple circuits, gates, logic, etc.). Circuitry membership may be flexible over time. Circuitries include members that may, alone or in combination, perform specified operations when operating. In an example, hardware of the circuitry may be immutably designed to carry out a specific operation (e.g., hardwired). In an example, the hardware of the circuitry may include variably connected physical components (e.g., execution units, transistors, simple circuits, etc.) including a machine readable medium physically modified (e.g., magnetically, electrically, moveable placement of invariant massed particles, etc.) to encode instructions of the specific operation. In connecting the physical components, the underlying electrical properties of a hardware constituent are changed, for example, from an insulator to a conductor or vice versa. The instructions enable embedded hardware (e.g., the execution units or a loading mechanism) to create members of the circuitry in hardware via the variable connections to carry out portions of the specific operation when in operation. Accordingly, in an example, the machine readable medium elements are part of the circuitry or are communicatively coupled to the other components of the circuitry when the device is operating. In an example, any of the physical components may be used in more than one member of more than one circuitry. For example, under operation, execution units may be used in a first circuit of a first circuitry at one point in time and reused by a second circuit in the first circuitry, or by a third circuit in a second circuitry at a different time. Additional examples of these components with respect to the machine 600 follow.

In alternative embodiments, the machine 600 may operate as a standalone device or may be connected (e.g., networked) to other machines. In a networked deployment, the machine 600 may operate in the capacity of a server machine, a client machine, or both in server-client network environments. In an example, the machine 600 may act as a peer machine in peer-to-peer (P2P) (or other distributed) network environment. The machine 600 may be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

The machine (e.g., computer system) 600 may include a hardware processor 602 (e.g., a central processing unit (CPU), a graphics processing unit (GPU), a hardware processor core, or any combination thereof), a main memory 604, a static memory (e.g., memory or storage for firmware, microcode, a basic-input-output (BIOS), unified extensible firmware interface (UEFI), etc.) 606, and mass storage 608 (e.g., hard drives, tape drives, flash storage, or other block devices) some or all of which may communicate with each other via an interlink (e.g., bus) 630. The machine 600 may further include a display unit 610, an alphanumeric input device 612 (e.g., a keyboard), and a user interface (UI) navigation device 614 (e.g., a mouse). In an example, the display unit 610, input device 612 and UI navigation device 614 may be a touch screen display. The machine 600 may additionally include a storage device (e.g., drive unit) 608, a signal generation device 618 (e.g., a speaker), a network interface device 620, and one or more sensors 616, such as a global positioning system (GPS) sensor, compass, accelerometer, or other sensor. The machine 600 may include an output controller 628, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

Registers of the processor 602, the main memory 604, the static memory 606, or the mass storage 608 may be, or include, a machine readable medium 622 on which is stored one or more sets of data structures or instructions 624 (e.g., software) embodying or utilized by any one or more of the techniques or functions described herein. The instructions 624 may also reside, completely or at least partially, within any of registers of the processor 602, the main memory 604, the static memory 606, or the mass storage 608 during execution thereof by the machine 600. In an example, one or any combination of the hardware processor 602, the main memory 604, the static memory 606, or the mass storage 608 may constitute the machine readable media 622. While the machine readable medium 622 is illustrated as a single medium, the term "machine readable medium" may include a single medium or multiple media (e.g., a centralized or distributed database, and/or associated caches and servers) configured to store the one or more instructions 624.

The term "machine readable medium" may include any medium that is capable of storing, encoding, or carrying instructions for execution by the machine 600 and that cause the machine 600 to perform any one or more of the techniques of the present disclosure, or that is capable of storing, encoding or carrying data structures used by or associated with such instructions. Non-limiting machine readable medium examples may include solid-state memories, optical media, magnetic media, and signals (e.g., radio frequency signals, other photon based signals, sound signals, etc.). In an example, a non-transitory machine readable medium comprises a machine readable medium with a plurality of particles having invariant (e.g., rest) mass, and thus are compositions of matter. Accordingly, non-transitory machine-readable media are machine readable media that do not include transitory propagating signals. Specific examples of non-transitory machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

In an example, information stored or otherwise provided on the machine readable medium 622 may be representative of the instructions 624, such as instructions 624 themselves or a format from which the instructions 624 may be derived. This format from which the instructions 624 may be derived may include source code, encoded instructions (e.g., in compressed or encrypted form), packaged instructions (e.g., split into multiple packages), or the like. The information representative of the instructions 624 in the machine readable medium 622 may be processed by processing circuitry into the instructions to implement any of the operations discussed herein. For example, deriving the instructions 624 from the information (e.g., processing by the processing circuitry) may include: compiling (e.g., from source code, object code, etc.), interpreting, loading, organizing (e.g., dynamically or statically linking), encoding, decoding, encrypting, unencrypting, packaging, unpackaging, or otherwise manipulating the information into the instructions 624.

In an example, the derivation of the instructions 624 may include assembly, compilation, or interpretation of the information (e.g., by the processing circuitry) to create the instructions 624 from some intermediate or preprocessed format provided by the machine readable medium 622. The information, when provided in multiple parts, may be combined, unpacked, and modified to create the instructions 624. For example, the information may be in multiple compressed source code packages (or object code, or binary executable code, etc.) on one or several remote servers. The source code packages may be encrypted when in transit over a network and decrypted, uncompressed, assembled (e.g., linked) if necessary, and compiled or interpreted (e.g., into a library, stand-alone executable etc.) at a local machine, and executed by the local machine.

The instructions 624 may be further transmitted or received over a communications network 626 using a transmission medium via the network interface device 620 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), LoRa/LoRaWAN, or satellite communication networks, mobile telephone networks (e.g., cellular networks such as those complying with 3G, 4G LTE/LTE-A, or 5G standards), Plain Old Telephone (POTS) networks, and wireless data networks (e.g., Institute of Electrical and Electronics Engineers (IEEE) 802.11 family of standards known as Wi-Fi^{®}, IEEE 802.15.4 family of standards, peer-to-peer (P2P) networks, among others. In an example, the network interface device 620 may include one or more physical jacks (e.g., Ethernet, coaxial, or phone jacks) or one or more antennas to connect to the communications network 626. In an example, the network interface device 620 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 600, and includes digital or analog communications signals or other intangible medium to facilitate communication of such software. A transmission medium is a machine readable medium.

The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The above description is intended to be illustrative, and not restrictive. For example, the above-described examples (or one or more aspects thereof) may be used in combination with each other. Other embodiments may be used, such as by one of ordinary skill in the art upon reviewing the above description. The Abstract is to allow the reader to quickly ascertain the nature of the technical disclosure and is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description, with each claim standing on its own as a separate embodiment. The scope of the embodiments should be determined with reference to the appended claims.

## Claims

1. A method for stylus trajectory prediction, the method comprising:
obtaining (505), by circuitry of a device, a set of points, the set of points derived from a stylus moving on a surface;
invoking (510), by the circuitry, an artificial neural network, ANN, on an input set, the input set based on the set of points, the ANN configured to output a next point from the input set, the next point being a prediction of a location of the stylus, the ANN trained to minimize angular error for the next point over other errors; and
communicating (515) the next point for rendering on a display.

2. The method of claim 1, wherein the device includes the surface and the display, and wherein the surface and the display are arranged such that the next point is rendered under the stylus.

3. The method of any of claims 1-2, comprising creating the input set from the set of points, including interpolating the set of points in time to produce a uniform time interval between said points.

4. The method of claim 3, wherein creating the input set from the set of points includes interpolating the set of points in time to produce a uniform time interval between points.

5. The method of claim 4, wherein the input set is a vector of coordinates, each element of the vector representing an interpolated position at the uniform time interval.

6. The method of claim 5, wherein creating the input set includes normalizing the vector with respect to origin, length, or angle.

7. The method of claim 6, wherein normalizing the vector with respect to origin includes shifting an origin of the vector to a latest detected coordinate of the stylus.

8. The method of any of claims 6-7, wherein normalizing the vector with respect to length includes modifying a length of the vector to a predefined length.

9. The method of any of claims 6-8, wherein normalizing the vector with respect to angle includes rotating the vector to a predefined angle.

10. The method of any of claims 3-9, wherein creating the input set from the set of points includes converting the set of points into polar coordinates, wherein each coordinate is defined by a pair that includes a radius and an angle.

11. The method of claim 10, wherein the ANN is trained on a training dataset.

12. The method of any of claims 10-11, wherein the ANN is configured to predict error for the radius and the angle independently.

13. A system comprising means to perform any method of claims 1-12.

14. At least one machine readable medium including instructions that, when executed by processing circuitry, cause the processing circuitry to perform any method of claims 1-12.

## Patentansprüche

1. Verfahren zur Stiftbahnvorhersage, wobei das Verfahren Folgendes umfasst:
Gewinnen (505) eines Satzes von Punkten, durch Schaltungen einer Vorrichtung, wobei der Satz von Punkten von einer Stiftbewegung auf einer Oberfläche abgeleitet wird;
Aufrufen (510), durch die Schaltungen, eines künstlichen neuronalen Netzes, ANN, an einem Eingabesatz, wobei der Eingabesatz auf dem Satz von Punkten basiert, das ANN konfiguriert ist, einen nächsten Punkt aus dem Eingabesatz auszugeben, wobei der nächste Punkt eine Vorhersage einer Position des Stifts ist, wobei das ANN trainiert ist, einen Winkelfehler für den nächsten Punkt über andere Fehler zu minimieren; und
Kommunizieren (515) des nächsten Punktes zwecks Renderns auf einer Anzeige.

2. Verfahren nach Anspruch 1, wobei die Vorrichtung die Oberfläche und die Anzeige beinhaltet und wobei die Oberfläche und die Anzeige derart angeordnet sind, dass der nächste Punkt unter dem Stift gerendert wird.

3. Verfahren nach einem der Ansprüche 1 bis 2, das Erstellen des Eingabesatzes aus dem Satz von Punkten, einschließlich des zeitlichen Interpolierens des Satzes von Punkten, um ein gleichmäßiges Zeitintervall zwischen den Punkten zu produzieren, umfassend.

4. Verfahren nach Anspruch 3, wobei das Erstellen des Eingabesatzes aus dem Satz von Punkten das zeitliche Interpolieren des Satzes von Punkten, um ein gleichmäßiges Zeitintervall zwischen den Punkten zu produzieren, einschließt.

5. Verfahren nach Anspruch 4, wobei der Eingabesatz ein Vektor von Koordinaten ist, wobei jedes Element des Vektors eine interpolierte Position in dem gleichmäßigen Zeitintervall darstellt.

6. Verfahren nach Anspruch 5, wobei das Erstellen des Eingabesatzes das Normalisieren des Vektors in Bezug auf Ursprung, Länge oder Winkel einschließt.

7. Verfahren nach Anspruch 6, wobei das Normalisieren des Vektors in Bezug auf Ursprung das Verschieben eines Ursprungs des Vektors auf eine zuletzt erkannte Koordinate des Stifts einschließt.

8. Verfahren nach einem der Ansprüche 6-7, wobei das Normalisieren des Vektors in Bezug auf Länge das Modifizieren einer Länge des Vektors auf eine vordefinierte Länge einschließt.

9. Verfahren nach einem der Ansprüche 6-8, wobei das Normalisieren des Vektors in Bezug auf Winkel das Drehen des Winkels auf einen vordefinierten Winkel einschließt.

10. Verfahren nach einem der Ansprüche 3-9, wobei das Erstellen des Eingabesatzes aus dem Satz von Punkten das Umwandeln des Satzes von Punkten in polare Koordinaten einschließt, wobei jede Koordinate durch ein Paar definiert ist, das einen Radius und einen Winkel einschließt.

11. Verfahren nach Anspruch 10, wobei das ANN an einem Trainingsdatensatz trainiert wird.

12. Verfahren nach einem der Ansprüche 10-11, wobei das ANN konfiguriert wird, unabhängig Fehler für den Radius und den Winkel vorherzusagen.

13. System, das Mittel zum Durchführen eines Verfahrens nach einem der Ansprüche 1-12 umfasst.

14. Mindestens ein maschinenlesbares Medium, das Anweisungen beinhaltet, die, wenn sie durch eine Verarbeitungsschaltung ausgeführt werden, die Verarbeitungsschaltung veranlassen, ein Verfahren nach einem der Ansprüche 1-12 durchzuführen.

## Revendications

1. Procédé de prédiction de trajectoire de stylet, le procédé comprenant les étapes suivantes :
obtenir (505), par des circuits d'un dispositif, un ensemble de points, l'ensemble de points étant dérivé d'un stylet se déplaçant sur une surface ;
invoquer (510), par les circuits, un réseau neuronal artificiel, ANN, sur un ensemble d'entrée, l'ensemble d'entrée étant basé sur l'ensemble de points, l'ANN étant configuré pour délivrer en sortie un point suivant de l'ensemble d'entrée, le point suivant étant une prédiction d'un emplacement du stylet, l'ANN étant entraîné pour minimiser l'erreur angulaire pour le point suivant par rapport à d'autres erreurs ; et
communiquer (515) le point suivant pour un rendu sur un affichage.

2. Procédé selon la revendication 1, dans lequel le dispositif comprend la surface et l'affichage, et dans lequel la surface et l'affichage sont agencés de telle sorte que le point suivant soit rendu sous le stylet.

3. Procédé selon l'une quelconque des revendications 1 et 2, le procédé comprenant la création de l'ensemble d'entrée à partir de l'ensemble de points, y compris l'interpolation de l'ensemble de points dans le temps pour produire un intervalle de temps uniforme entre lesdits points.

4. Procédé selon la revendication 3, dans lequel la création de l'ensemble d'entrée à partir de l'ensemble de points comprend d'interpoler l'ensemble de points dans le temps pour produire un intervalle de temps uniforme entre des points.

5. Procédé selon la revendication 4, dans lequel l'ensemble d'entrée est un vecteur de coordonnées, chaque élément du vecteur représentant une position interpolée à l'intervalle de temps uniforme.

6. Procédé selon la revendication 5, dans lequel la création de l'ensemble d'entrée comprend la normalisation du vecteur par rapport à l'origine, la longueur ou l'angle.

7. Procédé selon la revendication 6, dans lequel la normalisation du vecteur par rapport à l'origine comprend le décalage d'une origine du vecteur vers la coordonnée détectée la plus récente du stylet.

8. Procédé selon l'une quelconque des revendications 6 et 7, dans lequel la normalisation du vecteur par rapport à la longueur comprend de modifier la longueur du vecteur à une longueur prédéfinie.

9. Procédé selon l'une quelconque des revendications 6 à 8, dans lequel la normalisation du vecteur par rapport à l'angle comprend de faire tourner le vecteur à un angle prédéfini.

10. Procédé selon l'une quelconque des revendications 3 à 9, dans lequel la création de l'ensemble d'entrée à partir de l'ensemble de points comprend la conversion de l'ensemble de points en coordonnées polaires, où chaque coordonnée est définie par une paire qui comprend un rayon et un angle.

11. Procédé selon la revendication 10, dans lequel l'ANN est entraîné sur un jeu de données d'entraînement.

12. Procédé selon l'une quelconque des revendications 10 et 11, dans lequel l'ANN est configuré pour prédire une erreur du rayon et de l'angle indépendamment.

13. Système comprenant des moyens destinés à exécuter l'un quelconque des procédés des revendications 1 à 12.

14. Au moins un support lisible par machine comprenant des instructions qui, lorsqu'elles sont exécutées par des circuits de traitement, amènent les circuits de traitement à exécuter un procédé quelconque des revendications 1 à 12.
